# EUROPEAN PATENT APPLICATION

(11) **EP 4 481 064 A1**
(43) Date of publication of application: **25.12.2024**
(21) Application number: 23826745.4
(22) Date of filing: 13.03.2023
(51) Int. Cl.: C21D 8/06, C22C 38/00, C22C 38/60

(54) **STEEL FOR HIGH-FREQUENCY HARDENING**

(30) Priority: 24.06.2022 JP 2022102105
(71) Applicant: JFE Steel Corporation, Tokyo 100-0011 (JP)
(72) Inventor: IMANAMI, Yuta, Tokyo 100-0011 (JP)
(74) Representative: Hoffmann Eitle
(86) International application number: PCT/JP2023/009730
(87) International publication number: WO 2023/248556

(57) **Abstract**

Provided is steel for induction hardening that has excellent cold forgeability and, in a process of producing an induction hardened component, allows omission of annealing before cold forging and refining heat treatment before induction hardening. The steel for induction hardening includes a chemical composition containing C: 0.36 mass% to 0.55 mass%, Si: 0.10 mass% or less, Mn: 0.15 mass% to 0.45 mass%, P: 0.050 mass% or less, S: 0.050 mass% or less, Al: 0.010 mass% to 0.090 mass%, Mo: 0.05 mass% to 0.35 mass%, Ti: 0.010 mass% to 0.200 mass%, B: 0.0005 mass% to 0.0100 mass%, and N: 0.0150 mass% or less, with the balance being Fe and impurity. The total fraction of ferritic microstructure and pearlitic microstructure is 80 % or more, and the fraction of ferritic microstructure is 40 % or more.

## Description

### TECHNICAL FIELD

The present disclosure relates to steel for induction hardening.

### BACKGROUND

Typically, components for machine structures for use in automobiles and the like are formed by hot forging or cold forging and then cut to arrive at a final shape. In particular, cold forging has superior dimensional accuracy and therefore has an advantage that the amount of cutting after forging can be decreased. For this reason, the number of applications of cold forged products has been increasing in recent years.

For example, JP 5679440 B2 (Patent Literature (PTL) 1) describes steel for induction hardening that has a specified spheroidized microstructure of cementite, excellent cold forgeability, and excellent torsional strength after induction hardening. Further, JP 2020-100896 A (PTL 2) describes steel for induction hardening and an induction hardened component that have a specified balance of alloying elements and that provide excellent hardness and surface fatigue strength due to induction hardening after normalizing.

### CITATION LIST

### Patent Literature

PTL 1: JP 5679440 B2
PTL 2: JP 2020-100896 A

### SUMMARY

### (Technical Problem)

Components for machine structures may be subjected to induction hardening as a final heat treatment after being formed into a component shape. Most such components typically undergo soft annealing before cold forging and refining heat treatment (quenching tempering) before induction hardening. With the intensifying component price competition in recent years and the growing momentum toward carbon neutrality (reduction of CO₂ emissions), there is an increasing need for steel material for which heat treatment can be omitted in the component production process.

The steel for induction hardening described in PTL 1 requires spheroidizing annealing before cold forging. Further, the steel for induction hardening described in PTL 2 requires refining heat treatment before induction hardening. Thus, according to conventional technology, an increase in component production costs due to additional heat treatment costs was a problem.

In view of the circumstances described above, it would be helpful to provide steel for induction hardening that has excellent cold forgeability and, in a process of producing an induction hardened component, allows omission of annealing before cold forging and refining heat treatment before induction hardening.

### (Solution to Problem)

The steel for induction hardening according to the present disclosure is as follows.
(1) Steel for induction hardening, the steel comprising a chemical composition containing (consisting of)
   C: 0.36 mass% to 0.55 mass%,
   Si: 0.10 mass% or less,
   Mn: 0.15 mass% to 0.45 mass%,
   P: 0.050 mass% or less,
   S: 0.050 mass% or less,
   Al: 0.010 mass% to 0.090 mass%,
   Mo: 0.05 mass% to 0.35 mass%,
   Ti: 0.010 mass% to 0.200 mass%,
   B: 0.0005 mass% to 0.0100 mass%, and
   N: 0.0150 mass% or less,
   with the balance being Fe and impurity,
   wherein a total fraction of ferritic microstructure and pearlitic microstructure is 80 % or more and a fraction of the ferritic microstructure is 40 % or more.
(2) The steel for induction hardening according to (1), above, wherein the chemical composition further contains one or more selected from the group consisting of
   Cr: 0.65 mass% or less,
   Cu: 1 mass% or less, and
   Ni: 1 mass% or less.
(3) The steel for induction hardening according to (1) or (2), above, wherein the chemical composition further contains one or more selected from the group consisting of
   Se: 0.3 mass% or less,
   Ca: 0.05 mass% or less,
   Pb: 0.3 mass% or less,
   Bi: 0.3 mass% or less,
   Mg: 0.05 mass% or less,
   Zr: 0.2 mass% or less,
   REM: 0.01 mass% or less, and
   O: 0.025 mass% or less.
(4) The steel for induction hardening according to any one of (1) to (3), above, wherein the chemical composition further contains one or more selected from the group consisting of
   Nb: 0.1 mass% or less, and
   V: 0.3 mass% or less.
(5) The steel for induction hardening according to any one of (1) to (4), above, wherein the chemical composition further contains one or more selected from the group consisting of
   Sn: 0.1 mass% or less, and
   Sb: 0.1 mass% or less.

### (Advantageous Effect)

According to the present disclosure, it is possible to provide steel for induction hardening that has excellent cold forgeability and, in a process of producing an induction hardened component, allows omission of annealing before cold forging and refining heat treatment before induction hardening.

### BRIEF DESCRIPTION OF THE DRAWINGS

In the accompanying drawings:
FIG. 1 is a graph illustrating a pattern of induction hardening; and
FIG. 2 is a graph illustrating a pattern of tempering.

### DETAILED DESCRIPTION

The following describes steel for induction hardening according to an embodiment of the present disclosure. First, an overview of the steel for induction hardening according to the present embodiment.

The steel for induction hardening according to the present embodiment includes a chemical composition containing carbon (C): 0.36 mass% to 0.55 mass%, silicon (Si): 0.10 mass% or less, manganese (Mn): 0.15 mass% to 0.45 mass%, phosphorus (P): 0.050 mass% or less, sulfur (S): 0.050 mass% or less, aluminum (Al): 0.010 mass% to 0.090 mass%, molybdenum (Mo): 0.05 mass% to 0.35 mass%, titanium (Ti): 0.010 mass% to 0.200 mass%, boron (B): 0.0005 mass% to 0.0100 mass%, and nitrogen (N): 0.0150 mass% or less, with the balance being iron (Fe) and impurity. In the steel for induction hardening according to the present embodiment, the total fraction of ferritic microstructure and pearlitic microstructure is 80 % or more and the fraction of ferritic microstructure is 40 % or more. Hereinafter, "a to b" (where a and b are numerical values and a < b) is inclusive, meaning "a or more to b or less".

The steel for induction hardening according to the present embodiment has excellent cold forgeability and also, in a process of producing an induction hardened component, allows omission of annealing before cold forging and refining heat treatment before induction hardening.

One example of steel for induction hardening according to the present embodiment is steel for induction hardening used in components for machine structures such as automobiles, specifically steel bars and wire rods.

Examples of components for which the induction hardened steel according to the present disclosure is used in the automotive field include engine crankshafts, camshafts, timing gears, and diesel common rails; propeller shafts, drive shafts, and CVJ outer races of drive systems; hubs, steering pinions, worm and ball joints of suspension systems; rotor shafts and motor shafts of electrical systems; and the like. Examples of components for which the induction hardened steel according to the present disclosure is used in the industrial machinery field include shafts of ball screws, rails of linear bearings, and the like, and in the construction machinery field include ring gears of travel reduction gears, inner and outer rings of slewing rings, and the like.

The following is a detailed description of the chemical composition of the steel for induction hardening according to the present embodiment.

### C: 0.36 mass% to 0.55 mass%

C needs to be added to at least 0.36 mass% to secure hardened layer strength after induction hardening. When the amount of C added exceeds 0.55 mass%, cold forgeability is decreased and quench cracks are more likely to occur during induction hardening. In order to improve the balance between cold forgeability and strength after induction hardening, the amount of C added is 0.36 mass% or more and 0.55 mass% or less. The amount of C added is preferably 0.36 mass% or more and 0.50 mass% or less. The amount of C added is more preferably 0.36 mass% or more and 0.40 mass% or less.

### Si: 0.10 mass% or less

Si is effective as a deoxidizer and is preferably added to 0.01 mass% or more. When the amount of Si added exceeds 0.10 mass%, cold forgeability is decreased. The amount of Si added is 0.10 mass% or less. The amount of Si added is preferably 0.08 mass% or less. The amount of Si added is more preferably 0.07 mass% or less.

### Mn: 0.15 mass% to 0.45 mass%

Mn has an effect of improving hardenability, and at least 0.15 mass% needs to be added to secure strength after induction hardening. When the amount of Mn added exceeds 0.45 mass%, cold forgeability is decreased. The amount of Mn added is 0.15 mass% or more to 0.45 mass% or less. The amount of Mn added is preferably 0.20 mass% or more to 0.40 mass% or less. The amount of Mn added is more preferably 0.20 mass% or more to 0.35 mass% or less.

### P: 0.050 mass% or less

P decreases the toughness of steel and therefore decreasing the amount of P added is desirable, but decreasing P to extremely low amounts leads to increased costs in the steelmaking process. From this cost perspective, P content is preferably 0.002 mass% or more. For machine structural component applications, the P content is 0.050 mass% or less. The P content is preferably 0.030 mass% or less. The P content is more preferably 0.015 mass% or less.

### S: 0.050 mass% or less

S is an element present as sulfide inclusions and is effective in improving machinability by cutting. The amount of S added is 0.050 mass% or less. When S is added exceeding 0.050 mass%, deformation resistance during cold forging does not increase, but crack occurrence does increase. When improvement in machinability by cutting is required, S may be added at 0.005 mass% or more. The amount of S added is preferably 0.005 mass% or more and 0.050 mass% or less. The amount of S added is more preferably 0.010 mass% or more. The amount of S added is more preferably 0.035 mass% or less.

### Al: 0.010 mass% to 0.090 mass%

Al is an element effective for deoxidation. Further, Al acts to refine crystal grain size by combining with N to form fine nitrides. To obtain these effects, the amount of Al added needs to be 0.010 mass% or more. However, when Al is added exceeding 0.090 mass%, the above effects are merely saturated. The amount of Al added is 0.010 mass% or more to 0.090 mass% or less. The amount of Al added is preferably 0.015 mass% or more to 0.050 mass% or less. The amount of Al added is more preferably 0.015 mass% or more to 0.035 mass% or less.

### Mo: 0.05 mass% to 0.35 mass%

Mo has an effect of improving hardenability, and at least 0.05 mass% needs to be added to secure strength after induction hardening. However, when the amount of Mo added exceeds 0.35 mass%, cold forgeability is decreased. The amount of Mo added is 0.05 mass% or more to 0.35 mass% or less. The amount of Mo added is preferably 0.07 mass% or more to 0.30 mass% or less. The amount of Mo added is more preferably 0.07 mass% or more to 0.25 mass% or less.

### Ti: 0.010 mass% to 0.200 mass%

Ti has the effect of decreasing solute N in steel by combining with N to form nitrides. Further, Ti has a stronger tendency to form nitrides than B, and therefore the formation of nitrides in B is inhibited and hardenability of steel can be improved by increasing solute B. To obtain this effect, Ti needs to be added in an amount of at least 0.010 mass%. However, adding Ti in excess of 0.200 mass% coarsens nitrides and causes fatigue fracture. The amount of Ti added is 0.010 mass% or more to 0.200 mass% or less. The amount of Ti added is preferably 0.010 mass% or more to 0.050 mass% or less. The amount of Ti added is more preferably 0.012 mass% or more. The amount of Ti added is more preferably 0.035 mass% or less.

### B: 0.0005 mass% to 0.0100 mass%

B has an effect of improving hardenability of steel by forming a solute in steel. In particular, when compared to Si, Mn, or Cr, B can increase hardenability without increasing deformation resistance. The addition of B is essential to achieve both excellent cold forgeability and sufficient hardenability. To obtain these effects, B needs to be added in an amount of at least 0.0005 mass%. However, when the amount of B added exceeds 0.0100 mass%, cracking after continuous casting is more likely to occur, resulting in lower throughput yield. The amount of B added is 0.0005 mass% or more and 0.0100 mass% or less. The amount of B added is preferably 0.0005 mass% or more and 0.0050 mass% or less. The amount of B added is more preferably 0.0010 mass% or more. The amount of B added is more preferably 0.0035 mass% or less.

### N: 0.0150 mass% or less

N combines with Al, Ti, and B to form nitrides. The amount of N added is 0.0150 mass% or less. When the amount of N added exceeds 0.0150 mass%, the formation of boron nitride (BN) becomes more pronounced and hardenability of steel decreases due to a decrease in solute B. Further, excessively lowering N content leads to increased costs in the steelmaking process, and therefore the amount of N added is preferably 0.0010 mass% or more and 0.0150 mass% or less. The amount of N added is more preferably 0.0015 mass% or more. The amount of N added is more preferably 0.0080 mass% or less. The amount of N added is most preferably 0.0020 mass% or more. The amount of N added is most preferably 0.0065 mass% or less.

In the steel for induction hardening according to the present embodiment, the balance of the chemical composition is Fe and impurity. According to the present embodiment, an impurity is something introduced from ore or scrap as a raw material, production environment, or the like, in the industrial production of steel material. Impurity is permitted to an extent that does not adversely affect properties of the steel for induction hardening according to the present embodiment.

The steel for induction hardening according to the present embodiment may further contain the optional components listed below.

### Cr: 0.65 mass% or less

Chromium (Cr) has an effect of improving hardenability and may be added. The amount of Cr added is preferably 0.05 mass% or more when strength improvement after induction hardening is required. However, Cr concentrates in carbides and has a strong effect of increasing thermal stability of carbides. When more than 0.65 mass% of Cr is added, there is an effect of carbides not dissolving during the heating of induction hardening, resulting in a decrease of solute carbon in steel and a decrease in strength after induction hardening. Therefore, the amount of Cr may be added as needed in the range of 0.65 mass% or less, depending on the conditions of induction hardening. In appropriate application where the aforementioned adverse effects must be stably avoided, the amount of Cr added is more preferably 0.35 mass% or less. The amount of Cr added is even more preferably 0.25 mass% or less.

### Cu: 1 mass% or less

### Ni: 1 mass% or less

Copper (Cu) and nickel (Ni) have an effect of improving hardenability and may be added. The amount of Cu added is preferably 0.01 mass% or more and the amount of Ni added is preferably 0.01 mass% or more when strength improvement after induction hardening is required. However, when Cu or Ni are added in excess of 1 mass%, cold forgeability is decreased. The amount of Cu and Ni added is each 1 mass% or less. The amount of Cu added is preferably 0.5 mass% or less. The amount of Ni added is preferably 0.5 mass% or less. The amount of Cu added is more preferably 0.35 mass% or less. The amount of Ni added is more preferably 0.35 mass% or less.

Se: 0.3 mass% or less, Ca: 0.05 mass% or less, Pb: 0.3 mass% or less, Bi: 0.3 mass% or less, Mg: 0.05 mass% or less, Zr: 0.2 mass% or less, REM: 0.01 mass% or less, O: 0.025 mass% or less

Selenium (Se), calcium (Ca), lead (Pb), bismuth (Bi), magnesium (Mg), zinc (Zr), rare earth metals (REM), and oxygen (O) are all effective in improving machinability by cutting and may be added in the above ranges as required. However, when added in excess of the above ranges, the effect is saturated.
Nb: 0.1 mass% or less
V: 0.3 mass% or less

Niobium (Nb) and vanadium (V) strengthen steel by precipitation by combining with C to form fine carbides. To obtain this effect, Nb and V may be added, the amount of Nb added is preferably 0.005 mass% or more, and the amount of V added is preferably 0.005 mass% or more. The amount of Nb added is 0.1 mass% or less. The amount of V added is 0.3 mass% or less. Addition of Nb and V in excess of these ranges leads to decreased continuous castability and decreased throughput yield.
Sn: 0.1 mass% or less
Sb: 0.1 mass% or less

Antimony (Sb) and tin (Sn) have an effect of making it easier to remove scale in descaling processes such as shot blasting and pickling, and may be added to obtain this effect. The amount of Sb added is preferably 0.003 mass% or more and the amount of Sn added is preferably 0.003 mass% or more. The amount of Sb added is 0.1 mass% or less. The amount of Sn added is 0.1 mass% or less. However, even when Sb and Sn are added in excess of 0.1 mass%, the effect of improving descaling properties saturates.

The chemical composition of the present disclosure has been described above. In order to soften the steel material and improve cold forgeability, controlling the microstructure is also necessary.

### Fraction of ferritic microstructure: 40 % or more

In order to make it possible to omit annealing before cold forging with the steel according to the present disclosure, the fraction of ferritic microstructure needs to be 40 % or more. When the fraction of ferritic microstructure is 40 % or more, deformation resistance is significantly decreased and annealing can be omitted. For this purpose, heating temperature in hot rolling is 1050 °C or less. As the heating temperature of hot rolling is lowered, the fraction of ferrite increases as austenite becomes finer and nucleation of subsequent ferrite transformations is promoted.

### Total fraction of ferritic microstructure and pearlitic microstructure: 80 % or more

The microstructure in the steel according to the present disclosure contains at least ferrite and can also contain any of pearlite, bainite, and martensite, depending on the cooling rate after hot rolling. Bainite and martensite, which occur at a high cooling rate, are relatively hard microstructure, and are therefore microstructure that increase steel material hardness and increase deformation resistance. In contrast, ferrite and pearlite, which occur at a low cooling rate, are relatively soft microstructure, and are therefore suitable microstructure that decrease steel material hardness and decrease deformation resistance. Therefore, in the steel according to the present disclosure, the total fraction of ferritic microstructure and pearlitic microstructure is 80 % or more, to improve cold forgeability. The total fraction is more preferably 90 % or more. Of course, the total fraction may be 100 %.

Further, when promoting austenitization in high-frequency heating is necessary, for example to thicken a hardened layer, the total fraction of ferritic microstructure and pearlitic microstructure is preferably 90 % or more, and the aspect ratio of cementite in pearlite or ferrite is preferably 2 or more. When the aspect ratio of cementite is 2 or more, the dissolution rate of cementite is greater and austenitization can occur earlier.

In order to obtain the desired microstructure, water cooling (including mist), air blast cooling, and other cooling accelerators are not recommended for cooling after hot rolling. However, water cooling (including mist), air blast cooling, and other cooling accelerators may be applied after the temperature of the steel material has been decreased to 400 °C or less. The cooling rate is 5.0 °C/s or less in the temperature range from 1000 °C to 400 °C after hot rolling. The cooling rate is preferably 3.0 °C/s or less. The cooling rate is most preferably 1.0 °C/s or less. Further, at 400 °C or less, any cooling rate may be set.

### EXAMPLES

The following describes structure and function effects of the present disclosure in more detail, by way of examples. Note that the present disclosure is not restricted by any means to these examples and appropriate modifications may be made within the scope of the spirit of the present disclosure, all such modifications being included within the technical scope of the present disclosure.

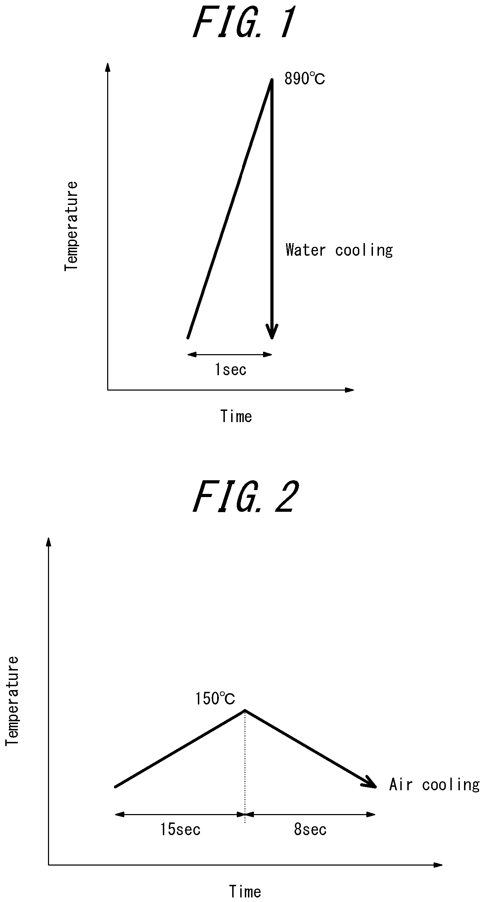

Steel samples having chemical compositions listed in Table 1 were formed into round bars 30 mm in diameter by hot rolling at heating temperatures listed in Table 2, then air cooled (partly water cooled or cooled by air blast), and then a cylinder 20 mm in diameter and 30 mm high was machined from the center of each round bar to be used as a test piece for cold forging. Then, for steel samples No. 1 to No. 41, No. 44, and No. 45, the test pieces for cold forging were cold forged. As the cold forging, upsetting to a 30 % height reduction was performed. The steel was then induction hardened and tempered according to the patterns illustrated in FIG. 1 and FIG. 2. Microscope test pieces for microstructure observation described below were taken from the test pieces for cold forging. In Tables 1 and 2, underlined portions indicate values that are outside the scope of the specifications of the present disclosure.

**[Table 1]**

| Table 1 | | | | | | | | | | | (mass%) | |
|---|---|---|---|---|---|---|---|---|---|---|---|---|
| No. | C | Si | Mn | P | S | Al | Mo | Ti | B | N | Other | Remarks |
| 1 | 0.39 | 0.04 | 0.33 | 0.015 | 0.026 | 0.034 | 0.21 | 0.034 | 0.0019 | 0.0055 | - | Disclosed compositions |
| 2 | 0.38 | 0.05 | 0.33 | 0.008 | 0.026 | 0.024 | 0.14 | 0.033 | 0.0033 | 0.0045 | - | |
| 3 | 0.37 | 0.01 | 0.32 | 0.013 | 0.031 | 0.024 | 0.21 | 0.017 | 0.0016 | 0.0036 | - | |
| 4 | 0.54 | 0.05 | 0.26 | 0.002 | 0.026 | 0.028 | 0.18 | 0.014 | 0.0012 | 0.0045 | - | |
| 5 | 0.37 | 0.09 | 0.33 | 0.007 | 0.025 | 0.021 | 0.09 | 0.021 | 0.0016 | 0.0054 | - | |
| 6 | 0.40 | 0.06 | 0.45 | 0.012 | 0.024 | 0.016 | 0.07 | 0.016 | 0.0022 | 0.0030 | - | |
| 7 | 0.37 | 0.05 | 0.16 | 0.001 | 0.028 | 0.032 | 0.20 | 0.025 | 0.0015 | 0.0059 | - | |
| 8 | 0.36 | 0.04 | 0.27 | 0.001 | 0.023 | 0.019 | 0.34 | 0.020 | 0.0032 | 0.0025 | - | |
| 9 | 0.37 | 0.04 | 0.30 | 0.007 | 0.027 | 0.016 | 0.05 | 0.020 | 0.0017 | 0.0055 | - | |
| 10 | 0.36 | 0.05 | 0.34 | 0.006 | 0.012 | 0.016 | 0.16 | 0.010 | 0.0027 | 0.0026 | - | |
| 11 | 0.40 | 0.03 | 0.28 | 0.006 | 0.021 | 0.017 | 0.10 | 0.032 | 0.0006 | 0.0046 | - | |
| 12 | 0.37 | 0.02 | 0.32 | 0.001 | 0.021 | 0.019 | 0.10 | 0.024 | 0.0027 | 0.0145 | - | |
| 13 | 0.38 | 0.02 | 0.28 | 0.007 | 0.024 | 0.027 | 0.17 | 0.019 | 0.0018 | 0.0055 | Cr:0.19 | |
| 14 | 0.38 | 0.07 | 0.29 | 0.001 | 0.015 | 0.020 | 0.07 | 0.019 | 0.0028 | 0.0020 | Cu:0.34 | |
| 15 | 0.37 | 0.02 | 0.29 | 0.006 | 0.032 | 0.025 | 0.15 | 0.016 | 0.0028 | 0.0031 | Ni:0.29 | |
| 16 | 0.39 | 0.01 | 0.29 | 0.012 | 0.012 | 0.028 | 0.21 | 0.023 | 0.0029 | 0.0024 | Se:0.29 | |
| 17 | 0.37 | 0.05 | 0.30 | 0.008 | 0.032 | 0.026 | 0.22 | 0.032 | 0.0032 | 0.0027 | Ca:0.04 | |
| 18 | 0.36 | 0.04 | 0.25 | 0.013 | 0.028 | 0.023 | 0.14 | 0.034 | 0.0035 | 0.0055 | Pb:0.28 | |
| 19 | 0.39 | 0.06 | 0.29 | 0.000 | 0.011 | 0.016 | 0.13 | 0.018 | 0.0016 | 0.0060 | Bi:0.25 | |
| 20 | 0.36 | 0.06 | 0.25 | 0.003 | 0.033 | 0.029 | 0.10 | 0.033 | 0.0022 | 0.0033 | Mg:0.03 | |
| 21 | 0.38 | 0.01 | 0.30 | 0.014 | 0.034 | 0.019 | 0.07 | 0.022 | 0.0011 | 0.0020 | Zr:0.18 | |
| 22 | 0.37 | 0.05 | 0.21 | 0.009 | 0.016 | 0.028 | 0.20 | 0.034 | 0.0033 | 0.0029 | REM:0.009 | |
| 23 | 0.38 | 0.02 | 0.31 | 0.001 | 0.011 | 0.019 | 0.12 | 0.018 | 0.0017 | 0.0032 | O:0.0238 | |
| 24 | 0.39 | 0.02 | 0.21 | 0.008 | 0.021 | 0.028 | 0.09 | 0.032 | 0.0015 | 0.0063 | Nb:0.08 | |
| 25 | 0.39 | 0.06 | 0.30 | 0.012 | 0.028 | 0.017 | 0.12 | 0.027 | 0.0031 | 0.0064 | V:0.21 | |
| 26 | 0.40 | 0.04 | 0.23 | 0.001 | 0.014 | 0.030 | 0.19 | 0.031 | 0.0026 | 0.0061 | Sn:0.1 | |
| 27 | 0.37 | 0.03 | 0.32 | 0.002 | 0.022 | 0.016 | 0.15 | 0.030 | 0.0033 | 0.0028 | Sb:0.08 | |
| 28 | 0.37 | 0.05 | 0.33 | 0.006 | 0.012 | 0.017 | 0.11 | 0.010 | 0.0025 | 0.0028 | - | |
| 29 | 0.40 | 0.04 | 0.29 | 0.006 | 0.020 | 0.017 | 0.12 | 0.022 | 0.0007 | 0.0029 | - | |
| 30 | 0.57 | 0.01 | 0.26 | 0.004 | 0.016 | 0.028 | 0.13 | 0.027 | 0.0012 | 0.0050 | - | Comparison compositions |
| 31 | 0.35 | 0.05 | 0.23 | 0.004 | 0.015 | 0.016 | 0.21 | 0.031 | 0.0031 | 0.0045 | - | |
| 32 | 0.38 | 0.13 | 0.29 | 0.008 | 0.013 | 0.021 | 0.14 | 0.031 | 0.0035 | 0.0055 | - | |
| 33 | 0.37 | 0.07 | 0.51 | 0.004 | 0.032 | 0.025 | 0.23 | 0.033 | 0.0011 | 0.0030 | - | |
| 34 | 0.37 | 0.02 | 0.14 | 0.008 | 0.021 | 0.021 | 0.20 | 0.020 | 0.0028 | 0.0045 | - | |
| 35 | 0.37 | 0.05 | 0.22 | 0.010 | 0.015 | 0.025 | 0.39 | 0.025 | 0.0027 | 0.0061 | - | |
| 36 | 0.38 | 0.05 | 0.24 | 0.003 | 0.011 | 0.022 | 0.04 | 0.035 | 0.0030 | 0.0063 | - | |
| 37 | 0.40 | 0.02 | 0.22 | 0.000 | 0.031 | 0.032 | 0.22 | 0.008 | 0.0027 | 0.0026 | - | |
| 38 | 0.36 | 0.04 | 0.30 | 0.012 | 0.020 | 0.015 | 0.15 | 0.027 | 0.0003 | 0.0029 | - | |
| 39 | 0.36 | 0.04 | 0.27 | 0.010 | 0.020 | 0.021 | 0.20 | 0.029 | 0.0027 | 0.0165 | - | |
| 40 | 0.38 | 0.25 | 0.60 | 0.001 | 0.030 | 0.030 | - | - | - | 0.0061 | - | |
| 41 | 0.40 | 0.22 | 0.76 | 0.014 | 0.028 | 0.018 | - | - | - | 0.0063 | - | |
| 42 | 0.40 | 0.23 | 0.89 | 0.010 | 0.016 | 0.031 | - | - | - | 0.0059 | - | |
| 43 | 0.38 | 0.21 | 0.77 | 0.000 | 0.035 | 0.029 | - | - | - | 0.0023 | - | |
| 44 | Same steel as No. 43 | | | | | | | | | | | |
| 45 | 0.44 | 0.06 | 0.26 | 0.002 | 0.025 | 0.028 | 0.17 | 0.014 | 0.0012 | 0.0044 | - | Disclosed composition |

### [Table 2]

**Table 2**

| No. | Heating temp. (°C) | Cooling rate after hot rolling (°C/s) | Total fraction of ferrite + pearlite (%) | Ferrite fraction (%) | Annealing before cold forging | Refining heat treatment before induction hardening and tempering | Cold forgeability | Strength after induction hardening and tempering (0.1 mm below surface) | Remarks |
|---|---|---|---|---|---|---|---|---|---|
| | | | | | | | Deformation resistance (MPa) | Hardness (HV) | |
| 1 | 1036 | 0.7 | 96.1 | 55.2 | No | No | 711 | 715 | Examples |
| 2 | 969 | 3.1 | 89.8 | 49.1 | No | No | 723 | 724 | |
| 3 | 981 | 0.9 | 97.4 | 65.7 | No | No | 725 | 718 | |
| 4 | 969 | 0.6 | 81.0 | 40.5 | No | No | 724 | 719 | |
| 5 | 1000 | 0.5 | 89.9 | 46.9 | No | No | 719 | 715 | |
| 6 | 1050 | 0.6 | 98.6 | 73.4 | No | No | 705 | 710 | |
| 7 | 1021 | 0.7 | 98.7 | 67.2 | No | No | 724 | 728 | |
| 8 | 1001 | 0.7 | 85.6 | 59.4 | No | No | 707 | 720 | |
| 9 | 1008 | 0.7 | 90.2 | 45.7 | No | No | 725 | 724 | |
| 10 | 965 | 0.6 | 95.2 | 55.7 | No | No | 725 | 710 | |
| 11 | 969 | 4.9 | 88.8 | 49.5 | No | No | 722 | 730 | |
| 12 | 1025 | 0.6 | 96.9 | 66.0 | No | No | 723 | 718 | |
| 13 | 1016 | 0.8 | 85.7 | 53.4 | No | No | 725 | 727 | |
| 14 | 1020 | 1.0 | 91.4 | 53.5 | No | No | 710 | 715 | |
| 15 | 960 | 1.0 | 89.8 | 53.3 | No | No | 719 | 722 | |
| 16 | 957 | 0.9 | 91.9 | 63.9 | No | No | 704 | 726 | |
| 17 | 991 | 0.9 | 97.7 | 62.6 | No | No | 718 | 709 | |
| 18 | 969 | 0.7 | 89.3 | 55.4 | No | No | 708 | 701 | |
| 19 | 1023 | 0.6 | 93.7 | 65.0 | No | No | 721 | 719 | |
| 20 | 954 | 0.6 | 89.0 | 59.1 | No | No | 721 | 727 | |
| 21 | 1002 | 0.6 | 88.7 | 62.3 | No | No | 702 | 724 | |
| 22 | 1031 | 0.8 | 95.9 | 70.7 | No | No | 715 | 728 | |
| 23 | 997 | 0.9 | 99.5 | 60.0 | No | No | 702 | 725 | |
| 24 | 1010 | 0.6 | 98.8 | 65.3 | No | No | 715 | 721 | |
| 25 | 960 | 0.7 | 85.8 | 57.7 | No | No | 723 | 705 | |
| 26 | 953 | 0.5 | 85.1 | 40.3 | No | No | 728 | 728 | |
| 27 | 964 | 0.7 | 91.6 | 56.4 | No | No | 729 | 705 | |
| 28 | 971 | 5.6 | 71.0 | 36.1 | No | No | 848 | 709 | Comparative Examples |
| 29 | 981 | 5.3 | 56.3 | 17.7 | No | No | 889 | 715 | |
| 30 | 999 | 0.9 | 91.1 | 47.9 | No | No | 825 | 708 | |
| 31 | 1011 | 0.8 | 99.1 | 60.5 | No | No | 724 | 679 | |
| 32 | 965 | 0.7 | 87.0 | 59.1 | No | No | 802 | 729 | |
| 33 | 1022 | 0.6 | 77.0 | 37.1 | No | No | 815 | 720 | |
| 34 | 1020 | 0.5 | 98.8 | 65.4 | No | No | 713 | 655 | |
| 35 | 1045 | 0.9 | 74.5 | 47.7 | No | No | 826 | 715 | |
| 36 | 1010 | 0.7 | 96.3 | 58.1 | No | No | 705 | 614 | |
| 37 | 993 | 0.9 | 93.1 | 62.4 | No | No | 715 | 635 | |
| 38 | 1048 | 0.6 | 92.3 | 65.7 | No | No | 704 | 636 | |
| 39 | 1013 | 0.6 | 88.8 | 49.8 | No | No | 702 | 649 | |
| 40 | 1044 | 1.0 | 72.6 | 36.1 | No | No | 860 | 721 | |
| 41 | 1004 | 0.9 | 71.1 | 30.8 | No | No | 876 | 716 | |
| 42 | 959 | 0.9 | 72.3 | 41.3 | Yes | No | 711 | 596 | |
| 43 | 1034 | 0.5 | 71.4 | 36.0 | Yes | Yes | 725 | 701 | |
| 44 | 1060 | 0.6 | 71.0 | 38.9 | No | No | 745 | 716 | |
| 45 | 1058 | 0.6 | 72.5 | 38.5 | No | No | 741 | 720 | |

Further, for comparison, steel sample No. 42 was formed into a 30 mm diameter round bar by hot rolling, then air cooled (partly water cooled or cooled by air blast), and then soft annealed by holding at 760 °C for 4 h and furnace cooling. Then, a cylinder having a diameter of 20 mm and a height of 30 mm was machined from the center of the round bar to be used as a test piece for cold forging. Cold forging and induction hardening and tempering were performed using the same procedures as for steel samples No. 1 to No. 41, No. 44, and No. 45.

For steel sample No. 43, cold forging was performed using the same procedure as for No. 42, followed by refining heat treatment (refining heat treatment before induction hardening and tempering), where the steel was held at 900 °C for 30 min and then rapidly cooled, then held at 150 °C for 30 min and then air cooled. Steel sample No. 43 after refining heat treatment was then subjected to induction hardening and tempering as in the case of steel samples No. 1 to No. 41, No. 44, and No. 45.

Here, the microstructure was observed by mirror polishing a cross-section perpendicular to the cylindrical axis direction of each cold forging test piece, followed by etching with 3 % nital, and then using an optical microscope. Images taken via optical microscopy were used to determine the area fraction of ferritic microstructure and the area fraction of pearlitic microstructure using Image-Pro PLUS image interpretation software, and based on these area fractions, the total fraction of these microstructures was evaluated.

Further, cold forgeability was compared and evaluated by measuring load during the upsetting to a height reduction of 30 % described above and converting the measured values to deformation resistance values in accordance with the cold upsetting test method described in the Journal of The Japan Society for Technology of Plasticity, Vol. 22, No. 241, Feb. 1981, p. 139. When the deformation resistance is 730 MPa or less, annealing can be omitted. Further, for induction hardening strength after tempering, Vickers hardness (load 300 g) at a depth of 0.1 mm from a surface was measured at any 10 points on the test piece after treatment, and average values were compared and evaluated. The results of each of the above evaluations are also listed in Table 2.

Steel samples No. 40 to No. 44 correspond to S38C, a general-purpose JIS standard steel. The results listed in Table 2 indicate that all steels according to the present disclosure (Example steel samples, No. 1 to No. 27) had equivalent cold forgeability to annealed S38C (No. 42 and No. 43), even though annealing before cold forging was omitted. In addition, the results indicate that all steels according to the present disclosure had equivalent strength to refining heat-treated S38C (No. 43), even though refining heat treatment before induction hardening was omitted. Further, the results indicate that the alloy composition of the steel is closely related to the annealing before cold forging. Therefore, according to the present disclosure, both annealing before cold forging and refining heat treatment before induction hardening and tempering can be omitted at the same time.

As above, steel for induction hardening can be provided that has excellent cold forgeability and, in a process of producing an induction hardened component, allows omission of annealing before cold forging and refining heat treatment before induction hardening.

## Claims

1. Steel for induction hardening, the steel comprising a chemical composition containing
C: 0.36 mass% to 0.55 mass%,
Si: 0.10 mass% or less,
Mn: 0.15 mass% to 0.45 mass%,
P: 0.050 mass% or less,
S: 0.050 mass% or less,
Al: 0.010 mass% to 0.090 mass%,
Mo: 0.05 mass% to 0.35 mass%,
Ti: 0.010 mass% to 0.200 mass%,
B: 0.0005 mass% to 0.0100 mass%, and
N: 0.0150 mass% or less,
with the balance being Fe and impurity,
wherein a total fraction of ferritic microstructure and pearlitic microstructure is 80 % or more and a fraction of the ferritic microstructure is 40 % or more.

2. The steel for induction hardening according to claim 1, wherein the chemical composition further contains one or more selected from the group consisting of
Cr: 0.65 mass% or less,
Cu: 1 mass% or less, and
Ni: 1 mass% or less.

3. The steel for induction hardening according to claim 1 or 2, wherein the chemical composition further contains one or more selected from the group consisting of
Se: 0.3 mass% or less,
Ca: 0.05 mass% or less,
Pb: 0.3 mass% or less,
Bi: 0.3 mass% or less,
Mg: 0.05 mass% or less,
Zr: 0.2 mass% or less,
REM: 0.01 mass% or less, and
O: 0.025 mass% or less.

4. The steel for induction hardening according to any one of claims 1 to 3, wherein the chemical composition further contains one or more selected from the group consisting of
Nb: 0.1 mass% or less, and
V: 0.3 mass% or less.

5. The steel for induction hardening according to any one of claims 1 to 4, wherein the chemical composition further contains one or more selected from the group consisting of
Sn: 0.1 mass% or less, and
Sb: 0.1 mass% or less.
